# EUROPÄISCHE PATENTSCHRIFT

(11) **EP 1 575 720 B1**
(45) Veröffentlichungstag und Bekanntmachung des Hinweises auf die Patenterteilung: **02.08.2006**
(21) Anmeldenummer: 03779541.6
(22) Anmeldetag: 10.12.2003
(51) Int. Cl.: B21F 23/00, B65G 47/14

(54) **VERFAHREN UND VORRICHTUNG ZUM HERAUSLÖSEN UND VEREINZELN VON ABGELÄNGTEN, MAGNETISIERBAREN STAHLDRÄHTEN AUS EINEM DRAHTVORRAT**
METHOD AND DEVICE FOR EXTRACTING AND SEPARATING CUT, MAGNETIZABLE STEEL WIRES FROM A WIRE SUPPLY
PROCEDE ET DISPOSITIF POUR EXTRAIRE ET SEPARER DES FILS D'ACIER MAGNETISABLES SECTIONNES A PARTIR UN SYSTEME D'ALIMENTATION EN FIL

(30) Priorität: 17.12.2002 AT 18802002
(43) Veröffentlichungstag der Anmeldung: 21.09.2005
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter
(86) Internationale Anmeldenummer: PCT/AT2003/000364
(87) Internationale Veröffentlichungsnummer: WO 2004/054736

(56) Entgegenhaltungen:
- EP-A- 0 997 405
- DE-A- 1 556 338
- DE-B- 1 144 569
- PATENT ABSTRACTS OF JAPAN vol. 0162, no. 82 (M-1269), 23. Juni 1992 (1992-06-23) -& JP 04 072223 A (ASAHI CHEM IND CO LTD), 6. März 1992 (1992-03-06)

## Beschreibung

Die Erfindung betrifft ein Verfahren und eine Vorrichtung zum Herauslösen und Vereinzeln von abgelängten, magnetisierbaren Stahldrähten aus einem losen, ungeordneten Drahtvorrat.

Aus der DE - A1 - 1556338 ist eine Vorrichtung zum Auswählen von Drahtstäben aus Drahtbunden zwecks geordneter Weitergabe der ausgewählten Drahtstäbe an Drahtverarbeitungsmaschinen bekannt. Hierbei sind über einem Drahtstabmagazin heb- und senkbare Greifzangen angeordnet, deren Klemmschenkel nach unten gerichtet sind und sich zum unteren Ende hin keilartig verjüngen. Die Greifzangen weisen zwei bewegliche Klemmschenkel auf, um jeweils einen Drahtstab an einem Ende erfassen und aus dem Drahtbündel herauslösen zu können. Bei einer Sonderausführung weisen die Greifzangen einen zusätzlichen, feststehenden, zentralen Klemmschenkel auf, so dass gleichzeitig zwei Drahtstäbe erfasst und aus dem Drahtbund herausgelöst werden können. Mehrere Greifzangen können an oder unter einem gemeinsamen, ein Drahtstabmagazin überquerenden Träger angeordnet sein, der in Längsrichtung der Drähte hin- und herbewegbar ist. Aus der DE - C2 - 2414960 ist eine ähnliche Greifvorrichtung bekannt. Die beiden Vorrichtungen haben den Nachteil, dass die Greifer sehr breit sind und daher kleine gegenseitige Abstände der zu vereinzelnden Stäbe nicht verwirklicht werden können. Der Klemmmechanismus ist ausserdem sehr aufwendig und störanfällig, so dass der eingeklemmte Draht, bedingt ausserdem durch die keilförmige Ausbildung der Klemmschenkel, bei der Manipulation leicht herausrutschen kann.

Aus der DE - B1 - 1144569, die die Basis für den Oberbegriff des Anspruchs 1 bzw. 5 bildet, ist eine Vorrichtung zum Einzelentnehmen von langgestreckten, gleichliegend gelagerten Drähten aus magnetisierbarem Werkstoff bekannt. Hierbei werden einzelne Drähte mit Hilfe eines auf- und abwärts beweglichen Hubmagneten aus einem Vorratsbehälter entnommen und mehreren, in einer parallel zur Längsrichtung der Drähte und seitlich des Vorratsbe-hälters liegenden Reihe von Elektromagneten zugeführt. Überschüssige, an dem Hubmagneten anhaftende Drähte werden durch die bewegliche Klaue eines Drahtabweisers abgestreift. Die Klaue hindert ausserdem den am Hubmagneten haftenden Draht daran, nach unten zu fallen. Diese Vorrichtung hat den Nachteil, dass jeweils nur ein Draht erfasst werden kann und dass eine aufwendige Einrichtung zum Abstreifen der überschüssigen Drähte erforderlich ist.

Aufgabe der Erfindung ist es, die geschilderten Nachteile der bekannten Vorrichtungen zu vermeiden und ein Verfahren und eine Vorrichtung der einleitend angegebenen Art zu schaffen, die es ermöglichen, auf einfache und betriebssichere Weise einzelne Stahldrähte aus einem Vorrat von ungeordneten, abgelängten Stahldrähten herauszulösen, mit wählbarem Seitenabstand zu vereinzeln, sicher festzuklemmen und einer nachgeschalteten Weiterverarbeitungseinrichtung zur Verfügung zu stellen.

Das erfindungsgemäße Verfahren zeichnet sich dadurch aus, daß aus dem Drahtvorrat von Stahldrähten mit Hilfe von Magnetkraft zumindest eine Reihe von mehreren, einlagig vertikal übereinander angeordneten Stahldrähten gebildet wird, dass je Reihe jeweils der oberste Stahldraht abgesondert und zumindest ein Ende jedes abgesonderten Stahldrahtes festgelegt wird, dass alle übrigen Stahldrähte der Reihe in den Drahtvorrat abgeworfen werden und dass der abgesonderte Stahldraht bzw. die abgesonderten Stahldrähte einer Weiterverarbeitungseinrichtung zugeführt werden.

Gegenstand der Erfindung ist auch eine Vorrichtung zum Durchführen des Verfahrens, mit Haltemagneten zum Festhalten der Stahldrähte; diese Vorrichtung hat die Merkmale, dass zum Bilden der Reihen von mehreren, einlagig vertikal übereinander angeordneten Stahldrähten ein heb- und senkbarer Kamm mit mehreren Zähnen vorgesehen ist, wobei im Kamm zur Aufnahme der Stahldrähte Schlitze gebildet sind, deren Breite geringfügig größer als der Durchmesser des zu vereinzelnden Stahldrahtes ist, dass zum Festhalten der Enden der Stahldrähte in den Schlitzen zumindest ein zusammen mit dem Kamm heb- und senkbarer Magnet und zum Absondern und Vereinzeln sowie zum Festlegen der Enden der Stahldrähte eine seitlich verschiebbare Einrichtung vorgesehen sind, wogegen zum Abwerfen der restlichen Stahldrähte der Reihen in den Drahtvorrat ein heb- und senkbarer Abstreifer vorgesehen ist.

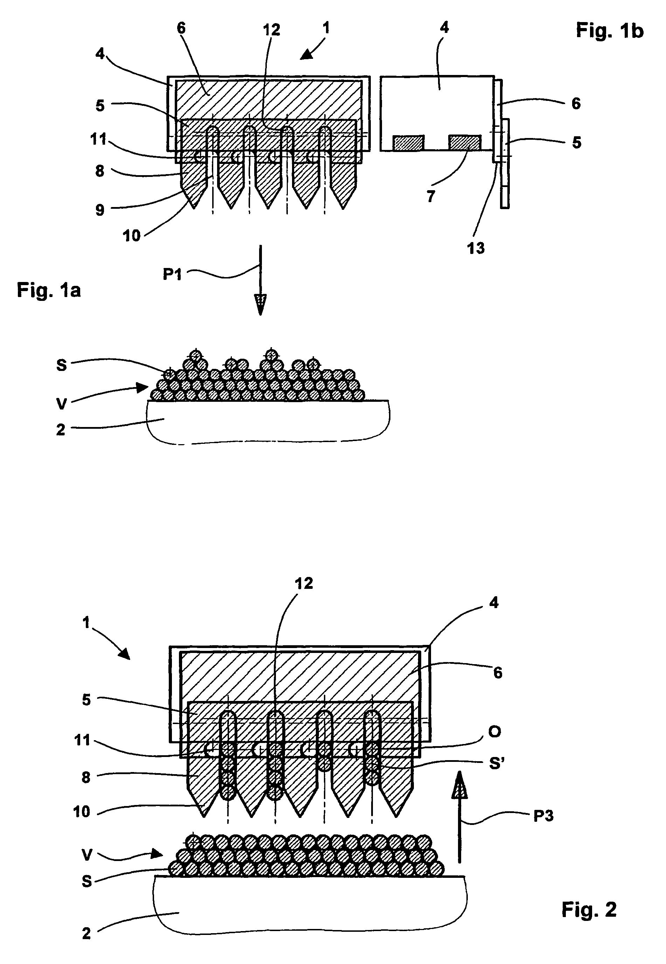

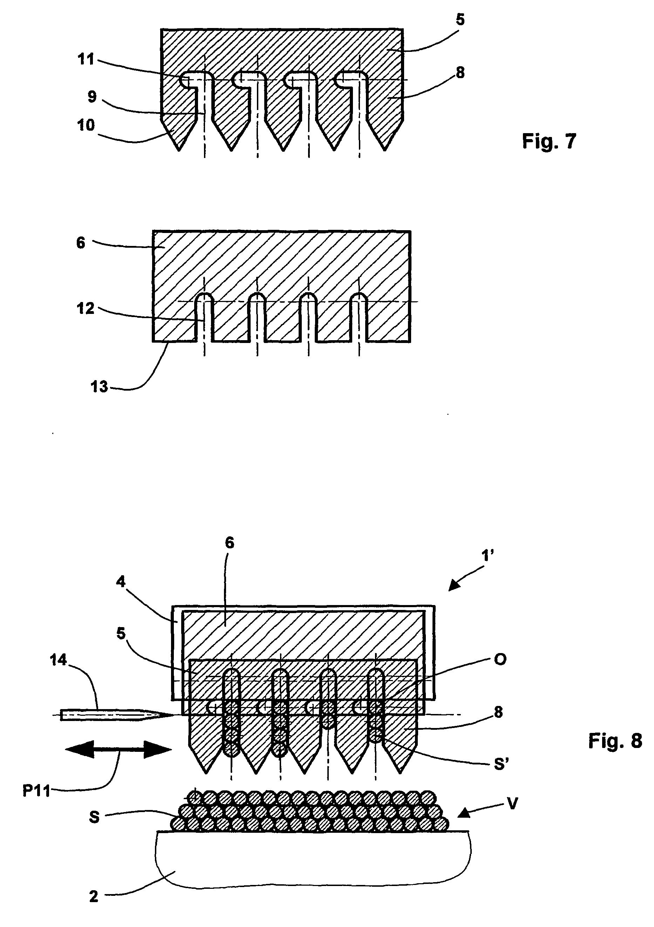

Weitere Merkmale und Vorteile der Erfindung werden nachfolgend an Ausführungsbeispielen unter Bezugnahme auf die Zeichnungen näher erläutert. Es zeigen: Fig. 1a und Fig. 1b in schematischer Darstellung eine Vorderansicht sowie eine Seitenansicht eines Ausführungsbeispieles einer erfindungsgemäßen Vorrichtung, die Fig. 2 bis 6 verschiedene Arbeitspositionen der Vorrichtung gemäß den Fig. 1a und 1b, Fig. 7 in schematischer Darstellung eine Vorderansicht des Kammes und des Abstreifers, und Fig. 8 in schematischer Darstellung eine Vorderansicht eines weiteren Ausführungsbeispieles einer erfindungsgemäßen Vorrichtung.

Die in den Fig. 1 bis 8 dargestellten erfindungsgemäßen Vorrichtungen 1, 1' dienen zum Herauslösen von Stahldrähten S', O aus einem Vorrat V loser, ungeordneter Stahldrähte S, zum Vereinzeln der Stahldrähte O und zum Bereitstellen der vereinzelten Stahldrähte O mit wählbarem seitlichen Abstand für das anschließende Zuführen der Stahldrähte O zu einer nachgeschalteten Weiterverarbeitungseinrichtung. Der Drahtvorrat V ist auf einer Drahtauflage 2 lose aufgelegt, wobei die Stahldrähte S möglichst parallel zu ihrer Längsrichtung angeordnet sind. Das Zuführen der vereinzelten Stahldrähte O zur Weiterverarbeitungseinrichtung erfolgt mit Hilfe einer nur schematisch angedeuteten Drahtzuführeinrichtung 3. Das Drahtmaterial muss aus magnetisierbaren Stahlqualitäten bestehen und kann im Rahmen der Erfindung nach thermo-mechanischen Verfahren und/oder durch Kaltverformung hergestellt werden. Die Oberfläche der Stahldrähte O, S, S' kann glatt oder, wie bei Bewehrungsdrähten üblich, gerippt sein. Der Querschnitt der Stahldrähte ist vorzugsweise rund.

Die in den Fig. 1 bis 7 dargestellte Vorrichtung 1 ist entsprechend der Pfeilrichtung P1 in Richtung des Drahtvorrates V, sowie in der entgegengesetzten Richtung P2 heb- bzw. senkbar und weist im Wesentlichen einen Magnethalter 4, einen Kamm 5 und einen Abstreifer 6 auf. Der Magnethalter 4 trägt an seiner dem Drahtvorrat V zugewandten Seite einen Magneten 7, der im Rahmen der Erfindung aus mehreren, gleichmäßig verteilten Magneten oder aus einem sich über die gesamte Breite erstreckenden Einzelmagnet bestehen kann, wobei die Magnete Elektro- oder Permanentmagnete sein können.

Der Kamm 5 weist an seiner dem Drahtvorrat V zugewandten Seite mehrere Zähne 8 auf, die jeweils einen Schlitz 9 einschließen und an ihren Enden 10 keilförmig ausgebildet sind. Der Grund der Schlitze 9 schließt bündig mit der dem Drahtvorrat V zugewandten Unterkante der Magnete 7 ab. Die Breite der Schlitze 9 ist geringfügig größer als der maximale Durchmesser der zu vereinzelnden Stahldrähte O. Für jeden Durchmesser der zu vereinzelnden Stahldrähte werden eigene Kämme mit entsprechend breiten Schlitzen verwendet. Im Rahmen der Erfindung ist es jedoch auch möglich, die Zähne seitlich verstellbar auszubilden, so dass durch Verstellung der Zähne 8 die Breite der Schlitze 9 an den Durchmesser der zu vereinzelnden Stahldrähte O angepasst werden kann. Des Weiteren ist es im Rahmen der Erfindung möglich, zum Anpassen der Schlitzbreite zwei gegeneinander verschiebbare Kämme zu verwenden. Am Grund der Schlitze 9 ist eine seitliche Ausbuchtung 11 ausgeformt, deren Tiefe und Breite derart gewählt ist, dass der zu vereinzelnden Stahldraht O vollständig aufgenommen werden kann.

Der Abstreifer 6 weist mehrere Schlitze 12 auf, deren Verteilung und Abmessungen den Schlitzen 9 des Kammes 5 entsprechen. Die dem Drahtvorrat V zugewandte Unterseite 13 des Abstreifers 6 hat eine ebene, waagrechte Fläche.

Die Fig. 1 bis 6 zeigen die Arbeitsschritte der erfindungsgemäßen Vereinzelungsvorrichtung 1, die in folgender Weise arbeitet: Die Vereinzelungseinrichtung 1 wird zunächst derart positioniert, dass sie im Bereich der Enden der Stahldrähte S des Drahtvorrats V oberhalb derselben angeordnet ist. Ausgehend von der Darstellung in Fig. 1 wird die Vereinzelungsvorrichtung 1 in Pfeilrichtung P1 so nahe zum Drahtvorrat V abgesenkt, bis die Magnetkraft der Magneten 7 derart wirksam wird, dass jeweils ein Ende der Stahldrähte S' angezogen, entsprechend der Pfeilrichtung P3 in die Schlitze 9 des Kammes 5 befördert und in diesen durch die Magnetkraft festgehalten wird. Hierbei bilden die Stahldrähte S' in den Schlitzen 9 jeweils einlagige, vertikal übereinander angeordnete Reihen. Wie Fig. 2 zeigt, kann die Anzahl der Stahldrähte O; S' je Schlitz 9 unterschiedlich sein. Um das Füllen der Schlitze 9 mit Stahldrähten O; S' zu erleichtern, muss die Breite der Schlitze 9 so groß gewählt werden, dass die Stahldrähte S' leicht in die Schlitze 9 gleiten können.

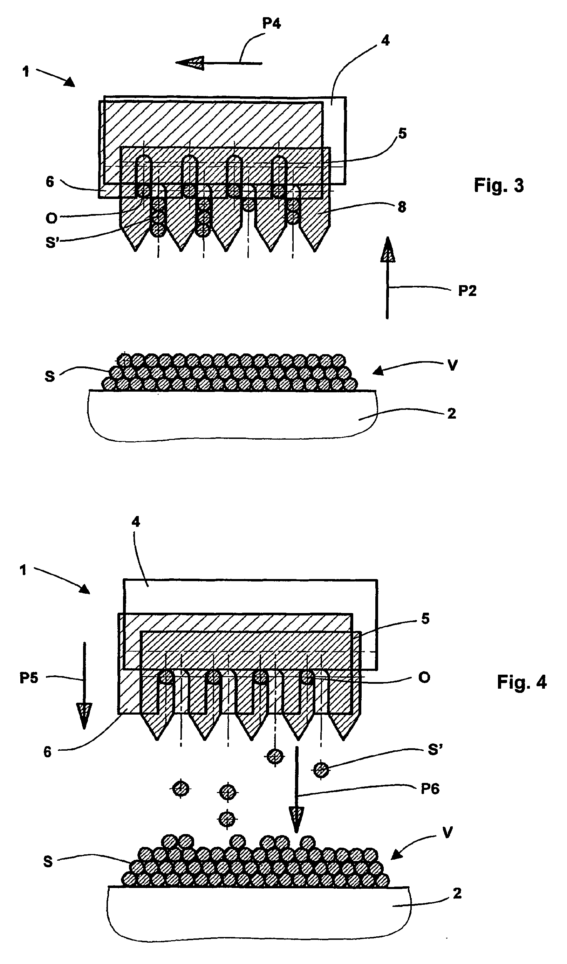

Durch eine seitliche Bewegung des Abstreifers 6 senkrecht zur Längsrichtung der Stahldrähte O entsprechend der Pfeilrichtung P4 werden, wie in Fig. 3 dargestellt, die Enden der obersten Stahldrähte O je Reihe aus den Schlitzen 9 seitlich in die Ausbuchtungen 11 geschoben und dadurch kraftschlüssig in den Ausbuchtungen 11 fixiert. Die Länge der seitlichen Bewegung ist geringfügig größer als der Durchmesser der Stahldrähte O. Die Vereinzelungsvorrichtung 1 wird anschließend entsprechend der Pfeilrichtung P2 in ihre Ausgangslage angehoben.

Wie in Fig. 4 dargestellt, wird zum Abwerfen der nicht benötigten übrigen Stahldrähte S' der Abstreifer 6 entsprechend der Pfeilrichtung P5 nach unten bewegt, wodurch die Unterseite 13 des Abstreifers 6 die übrigen Stahldrähte S' aus dem Wirkungsbereich des oder der Magneten 7 fördert und die Stahldrähte S' entsprechend der Pfeilrichtung P6 in den Drahtvorrat V zurückfallen. Um diese Abwurfbewegung zu beschleunigen, ist es im Rahmen der Erfindung möglich, bei Verwendung von Elektromagneten kurzfristig die Magnetkraft abzuschalten.

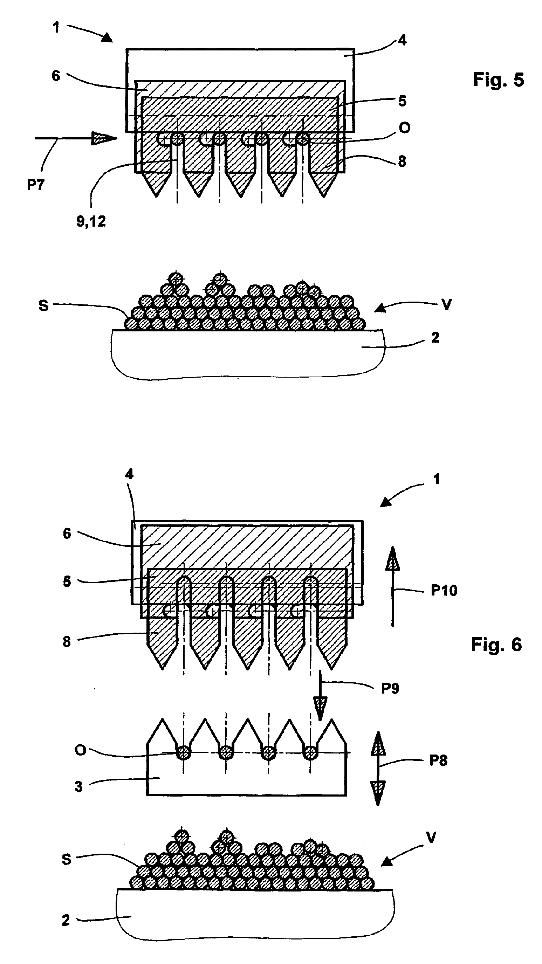

Zur Freigabe der ausgelösten, vereinzelten Stahldrähte O wird, wie in Fig. 5 dargestellt, der Abstreifer entsprechend der Pfeilrichtung P7 so weit seitlich zurückbewegt, bis die Schlitze 12 des Abstreifers 6 deckungsgleich mit den Schlitzen 9 des Kammes 5 liegen, wodurch die Stahldrähte O aus den Ausbuchtungen 11 in die Schlitze 9 zurückgefördert werden.

Durch eine entsprechende Positionierbewegung der Drahtzuführeinrichtung 3 in Richtung des Doppelpfeiles P8 ergreift die Drahtzuführeinrichtung 3 die Stahldrähte O und kämmt die Stahldrähte O entsprechend der Pfeilrichtung P9 nach unten aus den Schlitzen 9 heraus. Gleichzeitig wird der Abstreifer 6 entsprechend der Pfeilrichtung P10 nach oben in seine Ausgangslage zurückgezogen. Durch eine weitere, nicht dargestellte Positionierbewegung transportiert die Drahtzuführeinrichtung 3 die Stahldrähte O aus dem Bereich der Vereinzelungsvorrichtung 1 heraus und übergibt sie einer nachgeschalteten Weiterverarbeitungseinrichtung.

In Fig. 8 ist ein weiteres Ausführungsbeispiel einer Vorrichtung 1' dargestellt. Diese Vereinzelungsvorrichtung 1' weist im Wesentlichen die gleichen Elemente wie die unter Bezugnahme aud die Fig. 1 bis 7 beschriebene Ausführungsform auf, nämlich einen Magnethalter 4 mit einem oder mehreren Magneten 7, einen Kamm 5 sowie einen Abstreifer 6. Die Aufnahme der Enden Stahldrähte S aus dem Drahtvorrat V und die Bildung der Reihen entspricht den beschriebenen Arbeitsschritten gemäß den Fig. 1 und 2. Zum Absondern der obersten Stahldrähte O je Reihe wird von einer Seite her und senkrecht zur Längsrichtung der Stahldrähte O, S' ein Zwischenstück 14 aus unmagnetischem Material in einer entsprechend gestalteten Führung zwischen die obersten Stahldrähte O und die benachbarten Stahldrähte S' in Richtung des Doppelpfeiles P11 eingeschoben. Um ein Trennen der beiden Stahldrahtlagen zu ermöglichen, kann das Zwischenstück 14 im Rahmen der Erfindung aus einem vorne abgeflachten, dünnen Blechstreifen oder aus einem vorne angespitzten Stab bestehen. Die unter Bezugnahme auf die Fig. 3 und 5 beschriebenen seitlichen Verschiebungen des Abstreifers 6 entfallen bei diesem Ausführungsbeispiel. Das Abwerfen der übrigen Stahldrähte S' der Reihen entspricht dem unter Bezugnahme auf Fig. 4 beschriebenen Bewegungsablauf. Da das Zwischenstück 14 aus unmagnetischem Material besteht, können keine Stäbe S' am Zwischenstück 14 haften bleiben. Zur Freigabe der Schlitze 9 des Kammes 5 wird das Zwischenstück 14 in seine Ausgangslage in entsprechender Richtung des Doppelpfeiles P11 zurückgezogen, so dass, wie unter Bezugnahme auf Fig. 6 beschrieben, die Drahtzuführeinrichtung 3 die vereinzelten Stahldrähte O übernehmen und der Weiterverarbeitung zuführen kann. Im Rahmen der Erfindung können auch zwei Zwischenstücke Verwendung finden, die jeweils von gegenüberliegenden Seiten seitlich eingeschoben werden.

Es versteht sich, dass die dargestellten Ausführungsbeispiele im Rahmen des allgemeinen Erfindungsgedankens verschiedentlich, insbesondere hinsichtlich der Ausgestaltung des Kammes abgewandelt werden können. Der Kamm kann anstelle von fest mit dem Kamm verbundenen Zähnen mehrere einzeln, entsprechend den Pfeilrichtungen P1 und P2 senk- und hebbare Zähne aufweisen. Hierbei werden die Magneten 7 ebenfalls in Einzelmagnete aufgeteilt, die ebenfalls entsprechend den Pfeilrichtungen P1 und P2 senk- und hebbar und im Bereich der beweglichen Zähne angeordnet sind. Zum Erfassen einer Reihe von Stahldrähten O, S' aus dem Drahtvorrat V werden jeweils zwei benachbarte Zähne gemeinsam mit dem zugehörigen Einzelmagnet abgesenkt, und nach dem Erfassen der Stahldrähte zurück in ihre Ausgangslage gehoben. Dies geschieht in Analogie zu den Bewegungen der gesamten Vereinzelungsvorrichtung 1, wie dies unter Bezugnahme auf die Fig. 1 bis 3 beschrieben ist. Diese Ausführungsform findet immer dann Anwendung, wenn es erforderlich ist, einzelne Stahldrähte O, beispielsweise zum Nachbestücken, zu vereinzeln. Dieses Ausführungsbeispiel wird ausserdem immer dann verwendet, wenn es erforderlich ist, bei durch alle Zähne des Kammes vorgegebener maximaler Grundteilung die Stahldrähte nur in ausgewählter größerer Teilung zu vereinzeln. Im Rahmen der Erfindung können alle oder nur ausgewählte Zähne des Kammes einzeln heb- und senkbar ausgebildet sein. Des Weiteren ist es im Rahmen der Erfindung möglich, zum Erfassen mehrerer Reihen von Stahldrähten mehrere benachbarte Zähne gemeinsam zu bewegen.

## Patentansprüche

1. Verfahren zum Herauslösen und Vereinzeln von abgelängten, magnetisierbaren Stahldrähten (S) aus einem losen, ungeordneten Drahtvorrat (V), **dadurch gekennzeichnet, dass** aus dem Drahtvorrat (V) von Stahldrähten (S) mit Hilfe von Magnetkraft zumindest eine Reihe von mehreren, einlagig vertikal übereinander angeordneten Stahldrähten (O, S') gebildet wird, dass je Reihe jeweils der oberste Stahldraht (O) abgesondert und zumindest ein Ende jedes abgesonderten Stahldrahtes (O) festgelegt wird, dass alle übrigen Stahldrähte (S') der Reihe in den Drahtvorrat (V) abgeworfen werden und dass der abgesonderte Stahldraht bzw. die abgesonderten Stahldrähte (O) einer Weiterverarbeitungseinrichtung zugeführt werden.

2. Verfahren nach Anspruch 1, **dadurch gekennzeichnet, dass** zum Absondern und Festlegen der oberste Stahldraht (O) jeder Reihe einzeln oder mit anderen obersten Stahldrähten gemeinsam seitlich, senkrecht zu seiner Längsrichtung verschoben sind.

3. Verfahren nach einem der Ansprüche 1 oder 2, **dadurch gekennzeichnet, dass** zum Absondern und Festlegen des obersten Stahldrahtes (O) je Reihe zumindest ein unmagnetisches Zwischenstück (14) jeweils zwischen den obersten Stahldraht (O) und den benachbarten Stahldraht (S') einer Reihe eingeschoben wird.

4. Verfahren nach einem der Ansprüche 1 bis 3, **dadurch gekennzeichnet, dass** die abgesonderten Stahldrähte (O) einzeln oder gemeinsam von einer Drahtzuführeinrichtung (3) übernommen und der Weiterverarbeitungseinrichtung zugeführt werden.

5. Vorrichtung zum Durchführen des Verfahrens nach einem der Ansprüche 1 bis 4, mit Haltemagneten zum Festhalten der Stahldrähte, **dadurch gekennzeichnet, dass** zum Bilden der Reihen von mehreren, einlagig vertikal übereinander angeordneten Stahldrähten (O, S') ein heb- und senkbarer (P1, P2) Kamm (5) mit mehreren Zähnen (8) vorgesehen ist, wobei im Kamm (5) zur Aufnahme der Stahldrähte (O, S') Schlitze (9) gebildet sind, deren Breite geringfügig größer als der Durchmesser des zu vereinzelnden Stahldrahtes (O) ist, dass zum Festhalten der Enden der Stahldrähte (O, S') in den Schlitzen (9) zumindest ein zusammen mit dem Kamm (5) heb- und senkbarer (P1, P2) Magnet (7) und zum Absondern und Vereinzeln sowie zum Festlegen der Enden der Stahldrähte (0) eine seitlich (P4, P7; P11) verschiebbare Einrichtung (6; 14) vorgesehen sind, wogegen zum Abwerfen der restlichen Stahldrähte (S') der Reihen (R) in den Drahtvorrat (V) ein heb- und senkbarer (P10, P5) Abstreifer (6) vorgesehen ist.

6. Vorrichtung nach Anspruch 5, **dadurch gekennzeichnet, dass** zumindest zwei benachbarte Zähne gemeinsam heb- und senkbar (P2, P1) ausgebildet sind, wobei allen heb- und senkbaren Zähnen ein gemeinsam mit den Zähnen heb- und senkbarer Magnet zugeordnet ist.

7. Vorrichtung nach Anspruch 5 oder 6, **dadurch gekennzeichnet, dass** zum Absondern und Vereinzeln sowie zum Festlegen der Enden der Stahldrähte (O) der Abstreifer (6) seitlich (P4, P7) verschiebbar ist und mehrere Schlitze (12) aufweist, deren Verteilung und Abmessungen den Schlitzen (9) des Kammes (5) entspricht, wobei die Schlitze (9) des Kammes (5) an ihrem Grund je eine seitliche Ausbuchtung (11) zur Aufnahme des Endes des vereinzelten Stahldrahtes (O) aufweisen.

8. Vorrichtung nach Anspruch 5 oder 6, **dadurch gekennzeichnet, dass** zum Absondern und Vereinzeln sowie zum Festlegen der Enden der Stahldrähte (O) zumindest ein seitlich (P11), senkrecht zur Längsrichtung der Stahldrähte (O) verschiebbares Zwischenstück (14) aus unmagnetischem Material vorgesehen ist.

9. Vorrichtung nach Anspruch 8, **dadurch gekennzeichnet, dass** das Zwischenstück (14) aus einem vorne abgeflachten, dünnen Blechstreifen besteht.

10. Vorrichtung nach Anspruch 8, **dadurch gekennzeichnet, dass** das Zwischenstück (14) aus einem vorne angespitzten Stab besteht.

11. Vorrichtung nach einem der Ansprüche 5 bis 10, **dadurch gekennzeichnet, dass** der Magnet (7) ein schaltbarer Elektromagnet ist.

12. Vorrichtung nach einem der Ansprüche 5 bis 11, **dadurch gekennzeichnet, dass** die Breite der Schlitze (9) des Kammes (5) sowie die Breite der Schlitze (12) des Abstreifers (6) einstellbar sind.

13. Vorrichtung nach einem der Ansprüche 5 bis 12, **dadurch gekennzeichnet, dass** die vereinzelten Stahldrähte (O) aus den Schlitzen (9) des Kammes (5) mit Hilfe einer heb- und senkbaren (P8) Drahtzuführeinrichtung (3) auskämmbar und einer Weiterverarbeitungseinrichtung zuführbar sind.

## Claims

1. Process for extracting and isolating cut-to-length, magnetisable steel wires (S) from a loose, disordered wire supply (V), **characterised in that** at least one row of several steel wires (O, S') arranged in a single layer vertically above one another is formed from the wire supply (V) of steel wires (S) with the aid of magnetic force, **in that** in each case the uppermost steel wire (O) of each row is separated and at least one end of each separated steel wire (O) is fixed, **in that** all remaining steel wires (S') of the row are discarded into the wire supply (V) and **in that** the separated steel wire or the separated steel wires (O) are supplied to a further processing device.

2. Process according to claim 1, **characterised in that** for separating and for fixing, the uppermost steel wire (O) of each row is displaced individually or with other uppermost steel wires jointly laterally, vertically to its longitudinal direction.

3. Process according to one of claims 1 or 2, **characterised in that** to separate and fix the uppermost steel wire (O) of each row, at least one non-magnetic intermediate piece (14) is inserted in each case between the uppermost steel wire (O) and the adjacent steel wire (S') of a row.

4. Process according to one of claims 1 to 3, **characterised in that** the separated steel wires (O) are taken individually or together by a wire-supply device (3) and supplied to the further processing device.

5. Device for carrying out the process according to one of claims 1 to 4, with holding magnets for fixing the steel wires, **characterised in that** to form the rows of several steel wires (O, S') arranged in a single layer vertically above one another, a comb (5), which can be raised and lowered (P1, P2), with several teeth (8) is provided, wherein slots (9), the width of which is slightly greater than the diameter of the steel wire (O) to be isolated, are formed in the comb (5) to receive the steel wires (O, S'), **in that** to fix the ends of the steel wires (O, S') in the slots (9), at least one magnet (7), which can be raised and lowered (P1, P2) together with the comb (5), is provided and to separate and isolate and to fix the ends of the steel wires (O), a device (6; 14) which can be displaced laterally (P4, P7; P11) is provided, whereas to discard the remaining steel wires (S') of the rows (R) into the wire supply (V), a scraper (6) which can be raised and lowered (P10, P5) is provided.

6. Device according to claim 5, **characterised in that** at least two adjacent teeth are designed to be raised and lowered (P2, P1) together, wherein a magnet which can be raised and lowered together with the teeth is assigned to all teeth which can be raised and lowered.

7. Device according to claim 5 or 6, **characterised in that** to separate and isolate and to fix the ends of the steel wires (O), the scraper (6) can be displaced laterally (P4, P7) and has several slots (12), the distribution and dimensions of which correspond to the slots (9) of the comb (5), wherein the slots (9) of the comb (5) have on their base in each case a lateral bulge (11) to receive the end of the isolated steel wire (O).

8. Device according to claim 5 or 6, **characterised in that** to separate and isolate and to fix the ends of the steel wires (O), at least one intermediate piece (14) made from non-magnetic material and which can be displaced laterally (P 11), vertically to the longitudinal direction of the steel wires (O) is provided.

9. Device according to claim 8, **characterised in that** the intermediate piece (14) consists of a thin sheet metal strip which is flattened at the front.

10. Device according to claim 8, **characterised in that** the intermediate piece (14) consists of a rod which is pointed at the front.

11. Device according to one of claims 5 to 10, **characterised in that** the magnet (7) is a switchable electromagnet.

12. Device according to one of claims 5 to 11, **characterised in that** the width of the slots (9) of the comb (5) and the width of the slots (12) of the scraper (6) can be adjusted.

13. Device according to one of claims 5 to 12, **characterised in that** the isolated steel wires (O) can be combed out of the slots (9) of the comb (5) with the aid of a wire-supply device (3) which can be raised and lowered (P8) and can be supplied to a further processing device.

## Revendications

1. Procédé pour extraire d'un stock de fils en vrac et non classés (V) et pour dissocier des fils d'acier (S) découpés en longueur et magnétisables, **caractérisé en ce qu'**à partir du stock (V) de fils d'acier (S) au moins une rangée de plusieurs fils d'acier (O, S') disposés sur une couche et verticalement les uns sur les autres est formée à l'aide d'une force magnétique, **en ce que** pour chaque rangée respectivement le fil d'acier supérieur (O) est séparé et au moins une extrémité de chaque fil d'acier séparé (O) est fixée, **en ce que** tous les fils d'acier restants (S') de la rangée sont rejetés dans le stock de fils (V) et **en ce que** le fil d'acier séparé ou les fils d'acier séparés (O) sont amenés à un dispositif de poursuite du traitement.

2. Procédé selon la revendication 1, **caractérisé en ce que**, pour réaliser la séparation et la fixation, le fil d'acier supérieur (O) de chaque rangée est, individuellement ou en commun avec d'autres fils d'acier supérieurs, décalé latéralement et perpendiculairement à sa direction longitudinale.

3. Procédé selon l'une quelconque des revendications 1 ou 2, **caractérisé en ce que**, pour réaliser la séparation et la fixation du fil d'acier supérieur (O), au moins une pièce intermédiaire non magnétique (14) est introduite respectivement pour chaque rangée entre le fil d'acier supérieur (O) et le fil d'acier voisin (S') d'une rangée.

4. Procédé selon l'une quelconque des revendications 1 à 3, **caractérisé en ce que** les fils d'acier séparés (O) sont repris individuellement ou en commun par un dispositif d'alimentation en fil (3) et sont amenés au dispositif de poursuite du traitement.

5. Dispositif pour la réalisation du procédé selon l'une quelconque des revendications 1 à 4 avec des aimants de maintien pour tenir les fils d'acier, **caractérisé en ce qu'**un peigne (5) à plusieurs dents (8) pouvant être relevé et abaissé (P1, P2) est prévu pour former les rangées de plusieurs fils d'acier (O, S') disposés sur une couche et verticalement les uns sur les autres, le peigne (5) comprenant pour recevoir les fils d'acier (O, S') des fentes (9) dont la largeur est légèrement plus importante que le diamètre du fil d'acier à dissocier (O), **en ce qu'** au moins un aimant (7) qui peut être relevé et abaissé (P1, P2) en même temps que le peigne (5) est prévu pour maintenir les extrémités des fils d'acier (O, S') dans les fentes (9) et **en ce qu'**un dispositif (6 ; 14) pouvant être déplacé latéralement (P4, P7 ; P11) est prévu pour séparer et pour dissocier ainsi que pour fixer les extrémités des fils d'acier (O) tandis qu'un racleur (6) pouvant être relevé et abaissé (P10, P5) est prévu pour rejeter dans le stock de fils (V) les fils d'acier restants (S') des rangées (R).

6. Dispositif selon la revendication 5, **caractérisé en ce qu'**au moins deux dents voisines sont configurées pour pouvoir être relevées et abaissées en commun (P2, P1), alors qu'à toutes les dents pouvant être relevées et abaissées est attribué un aimant pouvant être relevé et abaissé en commun avec les dents.

7. Dispositif selon la revendication 5 ou 6, **caractérisé en ce que**, pour séparer et pour dissocier ainsi que pour fixer les extrémités des fils d'acier (O), le racleur (6) est déplaçable latéralement (P4, P7) et comprend plusieurs fentes (12) dont la répartition et les dimensions correspondent aux fentes (9) du peigne (5), les fentes (9) du peigne (5) comportant sur leur fond respectivement un bombage latéral (11) pour recevoir l'extrémité du fil d'acier dissocié (O).

8. Dispositif selon la revendication 5 ou 6, **caractérisé en ce que**, pour séparer et pour dissocier ainsi que pour fixer les extrémités des fils d'acier (O), au moins une pièce intermédiaire (14) en matériau non magnétique pouvant être déplacée latéralement (P11) et perpendiculairement à la direction longitudinale des fils d'acier (O) est prévue.

9. Dispositif selon la revendication 8, **caractérisé en ce que** la pièce intermédiaire (14) se compose d'une bande de tôle mince aplatie à l'avant.

10. Dispositif selon la revendication 8, **caractérisé en ce que** la pièce intermédiaire (14) se compose d'une tige appointée à l'avant.

11. Dispositif selon l'une quelconque des revendications 5 à 10, **caractérisé en ce que** l'aimant (7) est un électroaimant pouvant être actionné par commutation.

12. Dispositif selon l'une quelconque des revendications 5 à 11, **caractérisé en ce que** la largeur des fentes (9) du peigne (5) ainsi que la largeur des fentes (12) du racleur (6) sont réglables.

13. Dispositif selon l'une quelconque des revendications 5 à 12, **caractérisé en ce que** les fils d'acier dissociés (O) peuvent être extraits des fentes (9) du peigne (5) à l'aide d'un dispositif d'alimentation en fil (3) pouvant être relevé et abaissé (P8) et peuvent être amenés à un dispositif de poursuite du traitement.
